Europäisches Patentamt

European Patent Office

Office européen des brevets

(11) Veröffentlichungsnummer : **0 090 352**
**B1**

(12) **EUROPÄISCHE PATENTSCHRIFT**

(45) Veröffentlichungstag der Patentschrift :
**27.07.88**

(21) Anmeldenummer : **83102912.9**

(22) Anmeldetag : **24.03.83**

(51) Int. Cl.⁴ : **B 31 B   1/98**

(54) Verfahren und Vorrichtung zum Herstellen und Stapeln von Beuteln aus thermoplastischer Kunststoffolie.

(30) Priorität : **26.03.82 DE 3211217**

(43) Veröffentlichungstag der Anmeldung :
**05.10.83 Patentblatt 83/40**

(45) Bekanntmachung des Hinweises auf die Patenterteilung : **27.07.88 Patentblatt 88/30**

(84) Benannte Vertragsstaaten :
**AT BE CH DE FR GB IT LI LU NL SE**

(56) Entgegenhaltungen :
**DE-A- 2 940 399
FR-A- 2 267 200
FR-A- 2 370 580
GB-A- 2 023 063
US-A- 4 230 029
US-A- 4 261 780**

(73) Patentinhaber : **Bendig, Franz
Talstrasse 72
D-4018 Langenfeld (DE)**

**Bendig, Johannes
Talstrasse 72
D-4018 Langenfeld (DE)**

(72) Erfinder : **Bendig, Franz
Talstrasse 72
D-4018 Langenfeld (DE)**
Erfinder : **Bendig, Johannes
Talstrasse 72
D-4018 Langenfeld (DE)**

(74) Vertreter : **Selting, Günther, Dipl.-Ing. et al
Patentanwälte von Kreisler, Selting, Werner Deichmannhaus am Hauptbahnhof
D-5000 Köln 1 (DE)**

**Beschreibung**

Die Erfindung betrifft ein Verfahren und eine Vorrichtung zum Herstellen und Stapeln von Beuteln oder dergleichen Verpackungen aus thermoplastischer Kunststoffolie in Gestalt eines Schlauches oder Halbschlauches, wobei die beiden Folienlagen eines jeden Beutels durch eine Schweißnaht verbunden werden und daneben ein Trennschnitt zum Abtrennen des Beutels vom Schlauch oder Halbschlauch angebracht wird und der Beutel in einer angeschlossenen, mit Stapelstiften versehenen Festhaltevorrichtung im Bereich seines oberen Beutelrandes erfaßt und mit den vorhergehenden Beuteln gestapelt wird.

Durch die DE-B-21 41 045 ist es zum Herstellen von zu einem Block gestapelten und durch Schweißung im Kantenbereich miteinander verbundenen Beuteln oder dergleichen Verpackungen bekannt, daß mit dem Stapeln der Beutel jeder dem Stapel zugeführte Beutel mit dem vorhergehenden Beutel des Stapels an einer Kante bzw. im Bereich einer Kante verschweißt wird. Als Stapeleinrichtung hat der Schweißbalken einen nach unten weisenden Teil, dessen der Schweißfläche abgekehrten Rückseite mit einer Beutelklemmleiste zusammenwirkt, wobei der Beutelstapel zwischen Schweißbalken und der Beutelklemmleiste gehalten ist und der Schweißbalken an der Seite, die der Beutelklemmleiste zugekehrt ist, eine Schweißeinrichtung zum Verblocken der Beutel aufweist. Zur Stapelung werden die oberen Bereiche eines jeden Beutels durch eine Blasdüse von der Vorderkante des Schweißbalkens zu dessen abgekehrten Rückseite abgebogen. Weiterentwicklungen, wie sie beispielsweise aus der DE-A-22 54 448 und DE-U-74 34 007 und insbesondere der FR-A-22 67 200 zu ersehen sind, führten dazu, nicht lediglich die Stapeleinrichtung von dem Schweißbalken zu trennen, sondern in Bewegungsrichtung der Folienbahn gesehen in dichter Anordnung hintereinander eine Schweißeinrichtung, Schneidvorrichtung, Verblockungsvorrichtung und vielfach noch eine Perforiervorrichtung anzuordnen, sofern nicht die Perforation im Anschluß an die Herstellung des Beutelblocks an diesem durchgeführt wurde. Diese drei oder gegebenenfalls vier dicht hintereinander angeordneten Vorrichtungen bestimmen in ihrem Abstand hintereinander auch den Abstand der Schweißnaht für die Bodennaht des nachfolgenden Beutels und die Schweißnaht zum Verblocken des Beutels mit dem vorhergehenden Beutel des Beutelstapels, wie auch den Abstand der Abreißperforation zum jeweilig zugeordneten, parallel verlaufenden Beutelrand. Da die vorerwähnten Einzelvorrichtung zum Schweißen, Schneiden, Verblocken und Perforieren aus Gründen ihrer Festigkeit zum Schutz gegen ein Verziehen, auch aber aus Gründen der notwendigen Antriebe und der notwendigen Erhitzungen mit dazwischen liegenden Isolationen ein Mindestmaß nicht unterschreiten können, haben die mit diesen Vorrichtungen hergestellten Beutel zur Bildung der Bodennaht oder Schweißnaht zum Verblocken der Beutel untereinander einen vergleichsweise großen Abstand zum jeweiligen zugeordneten parallel verlaufenden Rand. Auch haben die Nadellöcher und auch die Perforationslinien bei den Abrißbeuteln einen großen Abstand zum zugeordneten querverlaufenden Rand. Dadurch ergibt sich ein prozentual hoher Anteil an Folienmaterial, der für das Fassungsvermögen des Beutels selbst verloren geht und als Verlust zu werten ist.

Da bei den Vorrichtungen der zuletzt beschriebenen Ausbildung die erhitzte Schweißeinrichtung von der erhitzten Verblockungseinrichtung getrennte Bauteile sind, haben diese auch gesonderte elektrische Zuleitungen zur Erhitzung der Schweißelemente, die zudem unterschiedliche Temperaturen haben. Der bauliche Aufwand ist entsprechend groß.

Die vorliegende Erfindung geht von der Aufgabe aus, ein Arbeitsverfahren und eine Vorrichtung zum Herstellen und Stapeln von Beuteln oder dergleichen aus thermoplastischer Kunststoffolie, die nach ihrer Herstellung in einer unmittelbar an die Schweißeinrichtung angeschlossenen Vorrichtung zu Beutelstapeln verblockt werden, zu schaffen, die mit einfachen technischen Mitteln insbesondere sehr dünnwandige Beutel mit nur geringem Verlust an Folienmaterial zu einem Beutelblock verbinden läßt.

Zur Lösung dieser Aufgabe wird bei einem Verfahren zum Herstellen und Stapeln von Beuteln oder dergleichen Verpackungen aus thermoplastischer Kunststoffolie in Gestalt eines Schlauches oder Halbschlauches, wobei die beiden Folienlagen eines jeden Beutels durch eine Querschweißnaht verbunden werden und daneben ein Trennschnitt zum Abtrennen des Beutels vom Schlauch oder Halbschlauch angebracht wird und der Beutel in einer angeschlossenen, mit Stapelstiften versehenen Festhaltevorrichtung im Bereich seines oberen Beutelrandes erfaßt und mit den vorhergehenden Beuteln gestapelt wird, wie dies schon aus der FR-A-2 267 200 bekannt ist, erfindungsgemäß vorgeschlagen, daß jeder Beutel nach seiner Herstellung durch Abtrennen vom Schlauch oder Halbschlauch um einen Betrag, der durch den Abstand der Stapelstifte zur Schweiß- und Trennvorrichtung bestimmt ist, in seiner Längsrichtung bewegt und durch eine Bewegung in Querrichtung dazu in die Festhaltevorrichtung gebracht wird.

Während nach bisherigem Stand der Technik Beutel nach ihrer Abtrennung vom Schlauch zu ihrer Stapelung lediglich in einer Richtung quer zu ihrer Längserstreckung oder mit anderen Worten Bewegungsbahn des Schlauches transportiert wurden, erfolgt nach der vorliegenden Erfindung zusätzlich eine Bewegung in Längsrichtung des Beutels. Durch die erfindungsgemäße Lösung ist es nunmehr möglich, die die Stapelstifte tragende Leiste in einem wählbaren Abstand hinter der Schweißvorrichtung anzubringen, so daß die optimalen Bedingungen in Bezug auf die Ausbildung und Bemessung und den Antrieb erfüllt werden können, weil der Abstand der Lochungen für die Stapelung durch die Stapelstifte zum oberen Rand des Beutels nicht durch die räumliche Anordnung der Stapelstifte zur Trenn- und Schweißvorrichtung und deren Abstand bestimmt wird, sondern durch das Maß der Verschiebung des fertigen, vom Schlauch abgetrennten Beutels von seiner Stapelung in Längserstreckung des Beutels.

Abhängig von diesem einstellbaren Maß der Längsverschiebung vor dem Aufschlagen auf die Stifte kann dann der Abstand der Lochungen durch Stapelstifte zum zugeordneten, parallel verlaufenden Beutelrand eingestellt und auch sehr nahe an den Beutelrand gelegt werden.

Der erfindungsgemäße Grundvorschlag läßt aber auch eine weitere wichtige Lösung zu. Sofern mit dem Stapeln der Beutel jeder dem Stapel zugeführte Beutel mit dem vorhergehenden Beutel des Stapels an einer Kante oder im Bereich einer Kante verschweißt werden soll, dann wird in weiterer erfindungsgemäßer Ausgestaltung vorgeschlagen, daß die Hitze einer bei der Beutelherstellung angebrachten Schweißnaht nach dem Transport des Beutels in dessen Längsrichtung und die Bewegung in Querrichtung durch Aufschlagen auf die Stifte zum Verblocken durch Verschweißen mit dem vorhergehenden Beutel des Stapels genutzt wird. Mit dieser Lösung ist es somit nicht mehr notwendig, der von der Schweißeinrichtung räumlich und baulich getrennten Stapeleinrichtung eine gesonderte Schweißeinrichtung zum Verblocken der Beutel zuzuordnen. Vielmehr wird die Hitze einer bei einer Beutelherstellung angebrachten Schweißnaht als Verblockungsschweißnaht verwendet.

Sofern zum Herstellen eines Beutels mit Bodennaht eine Trennahtschweißung über einen erhitzten Schweißkeil hergestellt wird, d. h. mit dem Schweißkeil zugleich eine Trennung erfolgt, dann dient in Bewegungsrichtung der Schlauchbahn gesehen der vor der Trennlinie angeordnete Teil der Schweißnaht zum Verschließen des nachfolgenden Beutels an dessen Boden und der dahinter angeordneten Teil der Schweißnaht zum Verblocken des soeben vom Schlauch abgetrennten Beutels mit dem vorhergehenden, in der Stapelvorrichtung vorhandenen Beutels, weil die bei der Beutelherstellung und Trennung vom Schlauch vorhandene Hitze der Schweißnaht zur Verblockung genutzt wird.

Die erfindungsgemäße Lösung, zur Verblockung des Beutels in der im Anschluß an die Schweißvorrichtung befindlichen Stapelvorrichtung die notwendige Erhitzung in der vorhergehenden baulich getrennten Schweißeinrichtung zu erzeugen, ist somit unabhängig von der Art der Schweißnaht und auch deren Ausbildung, so beispielsweise, ob die angebrachte Schweißnaht zugleich zum Verschluß des Bodens des nachfolgenden Beutels dient oder nicht. Auch ist es möglich, daß zum Verschluß des Bodens eine gesonderte Schweißnaht erfolgt, zum Stapeln des Beutels jedoch eine andere Schweißnaht, auch in ihrer Raumform unterschiedliche Schweißnaht, beispielsweise eine solche, die sich nicht über die gesamte Breite des Beutels erstreckt. So könnten die Schweißnähte oder Erhitzungen der Folie — vorgenommen in dem Bauteil der Schweißeinrichtung, jedoch zur Anwendung gebracht in dem nachfolgenden getrennten Bauteil der Stapeleinrichtung — auch aus punktförmigen Erhitzungen der Folie bestehen. Das Wesen der Erfindung ist, daß die Erhitzung der Folie zum Zwecke der Herstellung des Beutels und zum Zwecke der nachfolgenden Verblockung einander aufgestapelter Beutel lediglich in dem Bauteil der Schweißvorrichtung vorhanden ist. Dadurch ergibt sich eine sehr starke Vereinfachung der Beutelmaschinenherstellung in Bezug auf die Isolation in elektrischer und auch wärmetechnischer Hinsicht.

Besonders vorteilhaft ist eine solche Ausbildung der Vorrichtung, deren Schweiß- und Trennvorrichtung ihre Trenneinrichtung in Bewegungsrichtung der Folienbahn zwischen jeweils einer Schweißeinrichtung hat, wobei die erste Schweißeinrichtung eine Schweißnaht zum Verschließen des nachfolgenden Beutels an dessen Bodenende herstellt und die zweite Schweißeinrichtung diejenige Schweißnaht herstellt, die das obere Ende des Beutels nach dessen Bewegung in Längsrichtung und Aufschlagen auf die Stapelstifte in Querrichtung mit dem vorhergehenden Beutel des Beutelstapels verblockt. Es wird somit vorgeschlagen, in einem Arbeitsgang und mit einem Werkzeug eine Doppelnaht mit einem dazwischen liegenden Trennschnitt vorzusehen, wobei in Bewegungsrichtung der Folie die erste Schweißnaht für das Verschließen des nachfolgenden Beutels an dessen Boden und die dahinterliegende Schweißnaht zum Verblocken des soeben vom Schlauch abgetrennten Beutels mit dem vorhergehenden Beutel in der Stapelvorrichtung dient.

In weiterer erfindungsgemäßer Ausgestaltung wird vorgeschlagen, daß in Bewegungsrichtung der Folienbahn vor und hinter der Trenneinrichtung die Schweißeinrichtung auf beiden Seiten der Folienbahn angeordnet sind. Diese Maßnahme ist zur Herstellung von Schweißnähten zum Verbinden der Folienlagen eines Beutels bekannt. Sie ist neu zum Verblocken der Beutel und hier besonders vorteilhaft, weil, betrachtet bei seiner Stapelung, der Beutel an seiner zur Stapelvorrichtung gerichteten Seite mit einer frischen oder mit anderen Worten noch erhitzten Schweißnaht versehen ist, die sich mit der noch erhitzten Schweißnaht versehen ist, die sich mit der noch erhitzten Schweißnaht des vorhergehenden Beutels an der Seite des Beutels, die der Stapelvorrichtung abgekehrt ist, verbindet. Mit der erfindungsgemäßen Lösung werden somit die erhitzte Schweißnaht des gestapelten Beutels mit der erhitzten Schweißnaht des neu zu stapelnden Beutels verbunden, so daß eine sichere Verblockung gegeben ist.

In weiterer erfindungsgemäßer Ausgestaltung wird vorgeschlagen, daß die Schweißeinrichtung aus zwei gegenüberliegenden Schweißbalken besteht, von denen einer ein vorstehendes Schneidmesser aufweist, das in eine Nut des gegenüberliegenden Schweißbalkens eingreift. Schweißbalken dieser Ausübung sind an sich bekannt zur Herstellung von Beuteln mit einer Seitennahtschweißung, d.h. daß zu beiden Seiten eines Trennschnittes zwei Schweißnähte vorhanden sind. Diese Schweißeinrichtung ist jedoch nicht bekannt oder verwendet worden zum Herstellen eines Beutels mit einer Bodennahtschweißung.

Ein weiterer erfindungsgemäßer Vorschlag geht dahin, daß die beiden Schweißbalken an ihren gegenüberliegenden Stirnflächen mit einem hochwärmeisolierenden Belag, insbesondere Glasfibermatte, belegt sind, auf der außen einem jeden Schweißbalken zugeordnet, in Bewegungsrichtung des zu verarbeiteten Schlauches vor und hinter der Nut bzw. Messer ein Flachheizband angeordnet ist. Weiterhin wird vorgeschlagen, daß das einem Schweißbalken zugeordnete Messer aus einer an einem umlaufenden Zahnriemen angeordneten Klinge besteht und in der Nut des Schweißbalkens eines aus Kunststoff bestehende Führung für den Zahnriemen und die Klinge angeordnet ist.

In weiterer erfindungsgemäßer Ausgestaltung besteht die Vorrichtung zum Transport des Beutels in dessen Längsrichtung und Aufschlagen des Beutels auf die Stapelstifte durch eine Bewegung in Querrichtung aus einem um eine Achse quer zur Längserstreckung des Beutels rotierenden Körper. Der rotierende Körper ist dabei vorteilhaft mit einer Saugeinrichtung versehen. Als rotierender Körper kann hier gelten ein mit Saugeinrichtungen versehenes umlaufendes Förderband, dessen eine Trum, das dem Beutel zugekehrt ist, in dessen Bewegungsrichtung bewegt ist. Dieses Förderband, versehen mit Saugeinrichtungen, ist dann zugleich quer zur Längserstreckung des Beutels hin- und hergehend im Takt der Beutelherstellung verschiebbar. Besonders vorteilhaft ist ein rotierender Körper mit einer Außenfläche vorhanden, deren Abstand zu der ortsfesten Rotationsachse mit jeder Drehung sich wiederholend verändert. Der rotierende Körper ist dabei zweckmäßig mit einer hohlen Drehachse und als veränderliche Außenfläche mit einer sich über dessen Länge erstreckenden Blattfeder versehen, die durch eine gekrümmte Anschlagfläche gespannt ist und zum Aufschlagen des Beutels auf die Stifte entspannt ist.

In weiterer erfindungsgemäßer Ausgestaltung ist der rotierende Körper an seiner in Drehrichtung hinteren Wandung mit der Blattfeder versehen und von einer feststehenden Rinne mit etwa halbkreisförmigen Querschnitt umgeben, deren Öffnung zu dem zu transportierenden- und aufzuschlagenden Beutel zugerichtet ist, wobei die Blattfeder an der Innenwandung der Rinne anliegt und durch diese gespannt ist.

Weiterhin wird vorgeschlagen, daß in Bewegungsrichtung des Beutels hinter dem rotierenden Körper eine quer zur Beutelerstreckung bewegbares Schwert vorhanden ist, daß den von den Stapelstiften befreiten Beutelstapel faltet und auf einen Tisch und zwischen einer darüber angeordneten Rolle einlegt. Weiterhin wird vorgeschlagen, daß dem Tisch eine Perforier- und gegebenenfalls Locheinrichtung zugeordnet ist.

Die erfindungsgemäße Lösung kann auch angewendet sein bei Herstellung und Stapelung der Beutel in horizontaler Ausrichtung der Beutel. Sie ist jedoch besonders vorteilhaft angewendet bei einer Herstellung und Stapelung der Beutel in deren vertikaler Erstreckung. Dabei ist sie besonders vorteilhaft angewendet bei sehr dünnwandigen Folien und entsprechend sehr flexiblen Beuteln.

Die Erfindung ist in den Zeichnungen beispielhaft dargestellt.

Sie zeigen:

Figur 1 einen verblockten Beutelstapel,

Figur 2 einen Figur 1 gegenüber weiter verarbeiteten verblockten Beutelstapel,

Figur 3 bis 6 schematisch den nach der Erfindung erzielten Bewegungsablauf,

Figur 7 die Beutelherstell- und Stapelvorrichtung in einem vertikalen Schnitt,

Figur 8 den Abtransport eines Beutelstapels zur weiteren Bearbeitung,

Figur 9 bis 11 den Bewegungsablauf der Vorrichtung zum Verschieben eines Beutels in dessen Längsrichtung und Aufschlagen auf die Stapelstifte.

Figuren 12 und 13 Weiterentwicklungen der Beutelherstell- und Stapelvorrichtung.

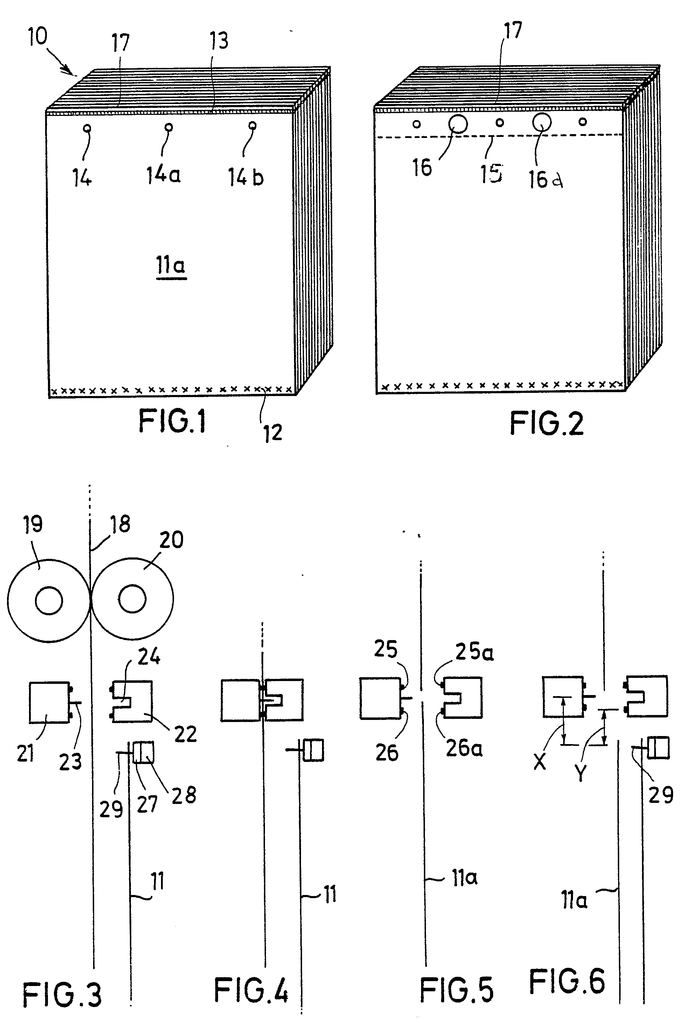

Figur 1 zeigt einen insgesamt mit 10 bezeichneten Block aus einzelnen Beuteln 11, die an ihrem unteren Ende mit einer Bodennahtschweißung 12 versehen sind. An ihrem oberen Ende sind die einzelnen Beutel in an sich bekannter Weise mit einer Verblockungsschweißnaht 13 versehen, die erhalten wurde in der Weise, daß beim Stapeln der Beutel jeder dem Stapel zugeführte Beutel mit dem vorhergehenden Beutel des Stapels durch Schweißung verbunden ist. Zugleich sind die Beutel bei ihrer Stapelung auf Stapelstifte aufgeschlagen, die in den Beuteln Lochungen 14, 14a, 14b usw. ergeben. Nachdem der Beutelstapel verblockt und aus der Stapelvorrichtung weggeführt worden ist, wird durch alle Beutel des Blocks eine Abreißperforation 15 angebracht, die sich über die gesamte Breite erstreckt und für den einzelnen Beutel die obere Einfüllöffnung gibt. Gegebenenfalls werden auch Lochungen 16, 16a angebracht, um den Beutelstapel an Stiften aufhängen zu können.

Aus den Figuren 1 und 2 ist ersichtlich, daß der Bereich oberhalb der Perforationslinie Abfall ist und entsprechend die Fläche oder das Volumen oberhalb der Perforationslinie 15 gering sein soll.

Bei bisherigen Vorrichtungen zum Herstellen und Stapeln mit Verblocken der Beutel in der Stapelvorrichtung läßt sich der Abstand der Perforationslinie zur oberen Beutelkante 17 nicht beliebig kurz einstellen, vielmehr wird dieser Abstand durch die notwendigen baulichen Bemessungen der in der Beutelherstellungs- und Stapelvorrichtung vorhandene Bauelemente bestimmt. Es sei bemerkt, daß unter gleichen Gesichtspunkten auch der Abstand der Stiftlöcher 14, 14a usw. zum oberen Beutelrand sowie auch der Verblockungsschweißnaht 13 zum oberen Beutelrand 17 diesen Kriterien unterliegen mit der Maßgabe, daß bei bisherigen Vorrichtungen, die in der an der Schweißeinrichtung angeschlossenen Stapelvorrichtung die Verblockungsschweißnaht 13 anbringen, ein größerer Abstand der Verblockungsschweißnaht 13 zur oberen Beutelkante 17 vorhanden ist.

Nach der Erfindung ist der Abstand der Nadellöcher 15 bzw. der Verblockungsschweißnaht 13 zum oberen Beutelrand 17 verstellbar und entsprechend auch in einem sehr geringen Abstand zur oberen Kante 17 des Beutels anbringbar durch die in den Figuren 3 bis 6 in prinzipieller Weise dargestellte und nachfolgend beschriebene Maßnahme.

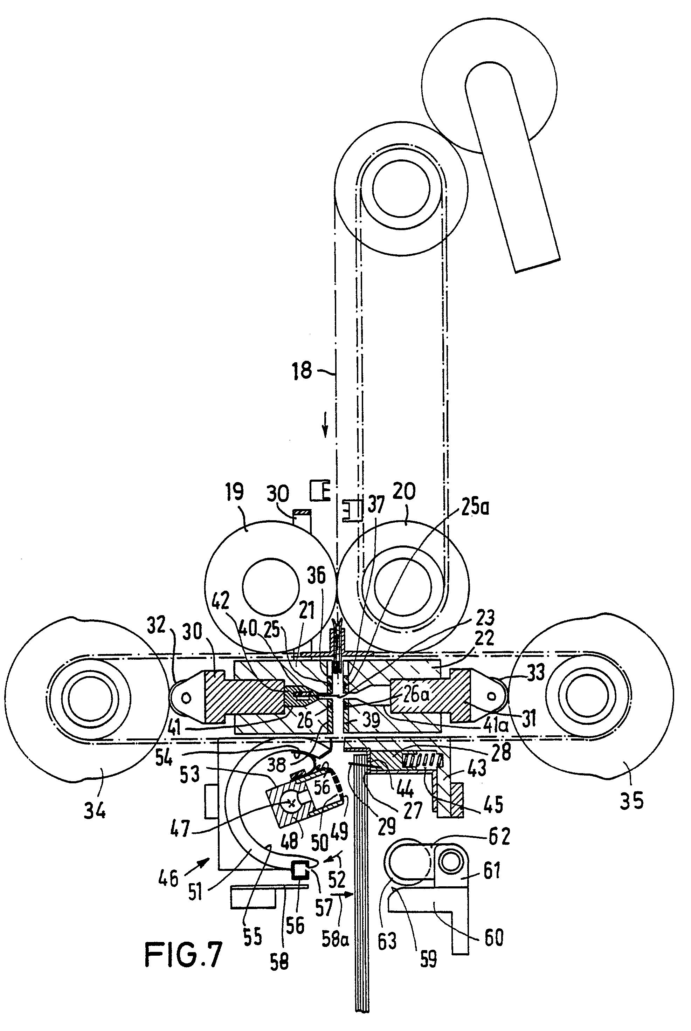

Nach Figur 3 wird ein Schlauch 18 aus thermoplastischer Kunststoffolie durch die beiden Vorzugswalzen 19 und 20 absatzweise um einen Betrag, der der Länge der herzustellenden Beutel 11 entspricht, zwischen die beiden Schweißbalken 21 und 22 bewegt. Jeder Schweißbalken 21 und 22 hat in Bewegungsrichtung des Schlauches gesehen vor dem Schneidmesser (23), das in eine Nut 24 des Gegenbalkens 22 eingreift, eine Schweißeinrichtung 25, 25a zum Herstellen der Bodennaht 12 des nachfolgenden Beutels und hinter dem Schneidmesser 23 eine Schweißeinrichtung 26, 26a zum Herstellen der Verblockungsnaht. Unterhalb der Schweißeinrichtung ist die Stapeleinrichtung vorhanden, bestehend aus einer Anschlagleiste 27 und einer Leiste 28 die die Nadeln 29 trägt. Nach Figur 3 ist bereits ein Beutel 11 auf den Nadeln 29 aufgereiht. Entsprechend der Darstellung in Figur 4 bei noch geschlossenen Schweißbalken und Figur 5 bei wieder geöffneten Schweißbalken ist der Beutel 11a vom Schlauch 18 abgetrennt. Dann wird dieser, wie Figur 6 zeigt, bevor er auf die Stifte 29 aufgeschlagen wird, in Längserstreckung des Schlauches 18 bzw. in Längserstreckung des Beutels 11a bewegt um einen Betrag, der in Beziehung steht zu dem Abstand der Stapelstifte 29 zur Schweißeinrichtung 22, hier angenommen als Betrag X. Es sei zu bemerken, daß auch andere Bezugspunkte der Stapelvorrichtung, hier zweckmäßig die Stifte, herangezogen werden können, so der Abstand Y der Stifte 29 zu den Schweißbändern 26 und 26a. Bei der Beutelherstellung wird Wert darauf gelegt, daß die Verblockungsschweißnaht der einzelnen Beutel, erhalten durch die Schweißbänder 26 und 26a, dicht oberhalb der Nadelstifte 29 bzw. der Lochungen 14, 14a usw. vorhanden ist, so daß der Betrag der Längsverschiebung nach der Beutelherstellung vor dem Aufschlagen auf die Stifte etwas geringer ist als der in Fig. 6 dargestellte Betrag Y. Die in Längsrichtung erfolgende Verschiebung des fertigen Beutels vor seinem Aufschlagen auf die Stifte richtet sich somit nach dem Abstand der Stapelvorrichtung zur Schweißvorrichtung und auch danach, ob die Verblockungsschweißung 13 einen mehr oder weniger großen Abstand zu den Stapelstiften 29 hat oder haben soll.

Nachdem der zweite Beutel aufgeschlagen ist, erfolgt ein erneuter Vorschub des Folienschlauches und die dann vorbeschriebene Bearbeitungsfolge.

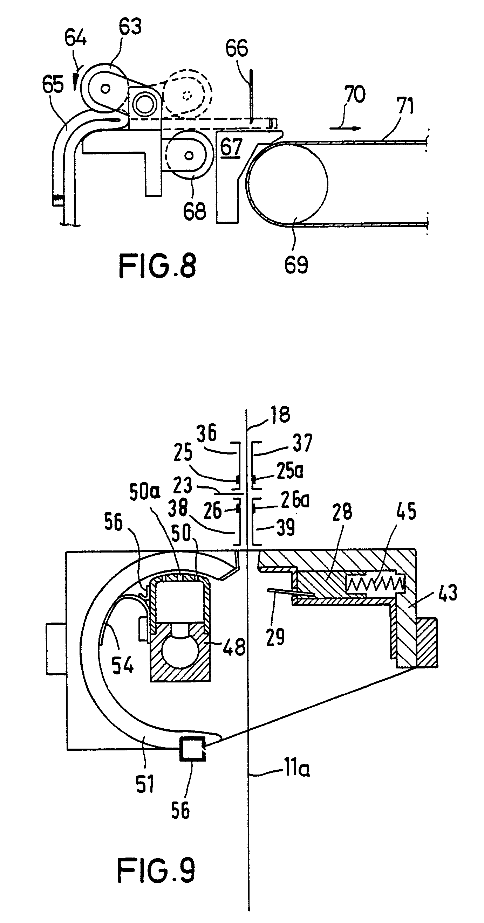

Figur 7 zeigt eine Vorrichtung zum Herstellen, Stapeln oder Verblocken von Beuteln im Detail. Die Folienbahn 18 wird durch die beiden Walzen 19 und 20 den Schweißbalken 21 und 22 zugeführt, die spiegelbildlich und von gleicher Ausbildung sind. Den Schweißbalken sind Stößel 30 und 31 zugeordnet, die Rollen 32 und 33 haben, die von Nockenscheiben 34 und 35 angetrieben werden. Die beiden gegenüberliegenden Stirnseiten der Schweißbalken 21 und 22 sind belegt mit einer Isolationslage aus hochwarmfestem Glasfiber, und zwar in Gestalt zweier Streifen 36 und 37 oberhalb des Schneidmessers 23 und Streifen 38 und 39 unterhalb des Messers, sofern eine Beutelherstellung und deren Stapelung in vertikaler Erstreckung der Beutel erfolgen soll, wie das in Figur 8 dargestellt ist. Diese vertikale Beutelherstellung und Stapelung ist besonders vorteilhaft bei sehr dünnwandigen Folien bzw. Beuteln.

In Bewegungsrichtung des Schlauches 18 sind vor dem Schneidmesser die Schweißbänder 25 und 25a und hinter dem Schneidmesser die Schweißbänder 26 und 26a vorhanden. Das Messer 23 ist angeordnet an einem Zahnriemen 30, der in einer verbreiterten Nut 41 des Schweißbalkens 21 vorhanden ist, die in ihrer Ausbildung der verbreiterten Nut 41a des Schweißbalkens 22 entspricht. Es sei bemerkt, daß vorteilhaft der Schweißbalken nicht einstückig ist, sondern aus einem oberen Abschnitt und einem unteren Abschnitt besteht, die miteinander verbunden sind. In Bewegungsrichtung des Schlauches 18 hinter dem Schweißbalken 22 ist die Stapelvorrichtung vorhanden, bestehend aus einem Träger 43, der an seinem zum Schlauch gerichteten Bereich die Anschlagleiste 27 hat, in der Öffnungen 44 vorhanden sind für den Durchtritt der Stapelstifte 29, die in einer Halterung 28 gelagert sind. Diese Halterung 28 wird durch eine Schraubenlinienfeder 45 in Richtung zur Folienbahn gedrückt. Durch eine nicht dargestellte Zugvorrichtung wird die Halterung 28 mit den Stapelstiften 29 und gegen den Druck der Feder 45 zurückgezogen, sofern eine ausreichend bemessene Anzahl von Beuteln auf den Stiften aufgeschlagen ist.

In Bewegungsrichtung des Folienschlauches 18 hinter dem Schweißbalken 21 ist die Vorrichtung zum Transport des abgetrennten Beutels und dessen Aufschlagen auf die Stapelstifte 29 vorhanden, die insgesamt mit 46 bezeichnet ist. Sie besteht aus einem um die Achse 47 rotierenden Körper 48, der innen hohl ausgebildet ist und sich über die Breite der Folienbahn 18 bzw. der daraus herzustellenden Beutel 11 erstreckt. Er hat eine gewölbte Stirnfläche 49, in die zahlreiche Saugöffnungen 50, 50a usw. vorhanden sind, damit unter Anwendung von Unterdruck der vom Schlauch abgetrennte Beutel von dieser Stirnfläche 49 erfaßt und an dieser gehalten wird. Diese rotierende Leiste mit der Ansaugfläche 49 ist angeordnet innerhalb einer Rinne 51 von etwas mehr als halbkreisförmigen Querschnitt, die zu der Stapelvorrichtung bzw. dem jeweiligen Beutel 11 hin offen ist. Die Saugleiste 48 hat an ihrer in deren Rotationsrichtung 52 gesehenen hinteren Wand 52 eine Blattfeder 54, die an der Innenwandung 55 der Rinne 51 anliegt und bei der Rotation der Leiste in dieser Rinne 51 gespannt ist.

Die Blattfeder ist an der Wandung 53 durch eine Leiste 56 abgestützt.

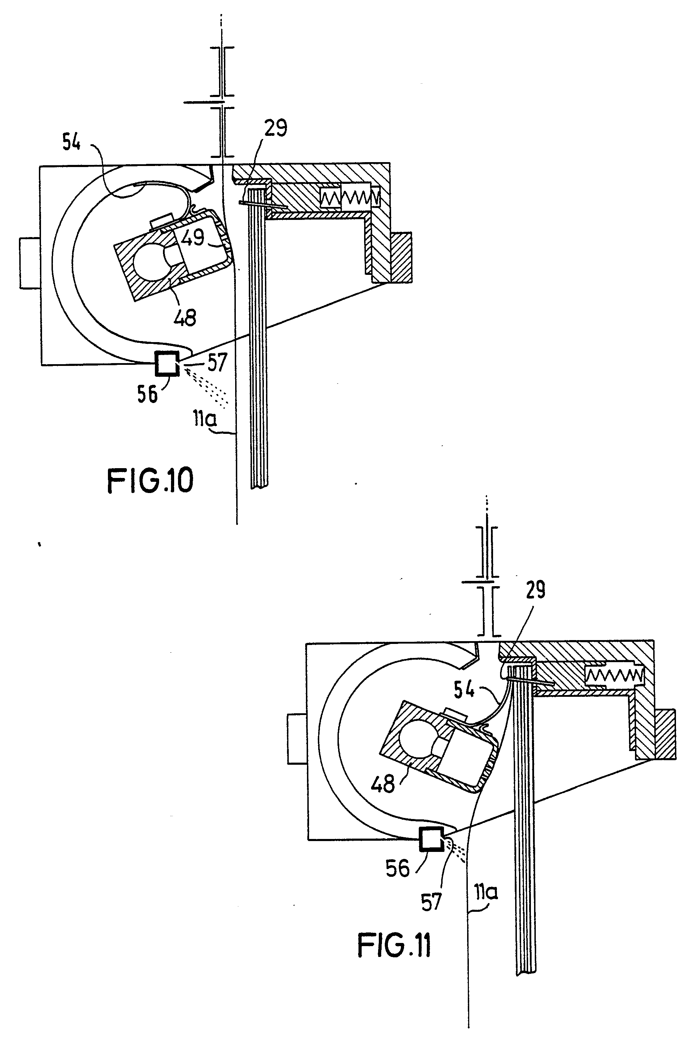

Die Funktion der Saugleiste zum Transport des Beutels 11a in dessen Längserstreckung und Aufschlagen auf die Stapelstifte 29 ist aus den Figuren 9 bis 11 ersichtlich. Figur 9 zeigt, daß der Beutel 11a von dem Schlauch 18 noch nicht abgetrennt ist. Die rotierende Leiste 48 ist mit deren Blattfeder 54 innerhalb der Rinne 51 vorhanden. Sobald, wie Figur 10 zeigt, der Beutel vom Schlauch abgeschnitten ist, wird der Beutel noch eine kurze Weile von den Klemmflächen der Schweißbalken 21 und 22 gehalten, bis die vordere Ansaugfläche 49 der rotierenden Leiste 48 den Beutel 11a erfaßt hat und hält. Durch weitere Rotation der Leiste 48 wird nicht lediglich der Beutel in dessen Längsrichtung transportiert, sondern nach dem Verlassen der Feder aus der Rinne 51 wird diese entspannt mit dem Ergebnis, daß sie das in Bewegungsrichtung des Beutels hintere Ende des Beutels auf die Stifte 29 aufschlägt. Zu diesem Zeitpunkt ist der Unterdruck aus der rotierenden Leiste 48 weggenommen.

An der unteren längsverlaufenden Kante der Rinne 51 ist noch ein Luftauslaßrohr 56 vorhanden mit Öffnungen 57, die zum Beutel 11a gerichtet sind und den Zweck haben, die Beutel an den Beutelstapel heranzublasen. Zugleich dienen diese Luftstrahlen ebenfalls dazu, die Bodenschweißnaht an jedem Beutel abzukühlen. Die Herstellung der Beutel und deren Stapelung in vertikaler Erstreckung der Beutel läßt dies in einfacher Weise zu.

Sobald eine ausreichende Anzahl der Beutel gestapelt ist, wird der intermittierende Zyklus der Rotation der Vorzugswalze 19 und 20 unterbrochen. Auch wird zweckmäßig der Antrieb der rotierenden Leiste 48 abgeschaltet und diese in einer Stellung innerhalb der Rinne nach Figur 9 belassen. Dann wird die, die Stifte 29 tragende Leiste 28 zurückgezogen und gleichzeitig oder kurz vorher das Schwert 58 in angegebener Pfeilrichtung 58a zu dem Beutelstapel gefahren, der den Stapel unter gleichzeitiger geringer Faltung im Bereich der abgerundeten vorderen Kante 59 eines Tisches 60 und einer dort an einem Hebel 62 gelagerten Walze 63 anlegt.

Figur 8 zeigt, daß die Walze 62 in angegebener Pfeilrichtung 64 rotiert. Sie zieht dann den Beutelstapel nach rechts, wobei dessen bei der Faltung entstandene obere Lage 65 mitgezogen wird, so daß schließlich die in Figur 8 in gestrichelter Linie dargestellte gestreckte Lage vorhanden ist. Dann wird über einen Kamm 66 in Verbindung mit der Gegenauflage 67 die in Figur 2 dargestellte Abreißperforation 15 angebracht, gegebenenfalls auch die Lochungen 16 und 16a. Der fertige Beutelstapel ruht neben der Gegenauflage 67 auch auf einer Walze 68 auf. Die Walze 63, gelagert am Hebel 62, ist, wie in gestrichelter Linie dargestellt, umgelenkt worden und dient dabei als Transportwalze zum Transport des gesamten Beutelstapels auf ein Förderband 69 mit der Umlenkwalze 69 und dem in Pfeilrichtung 70 bewegten Obertrum 71.

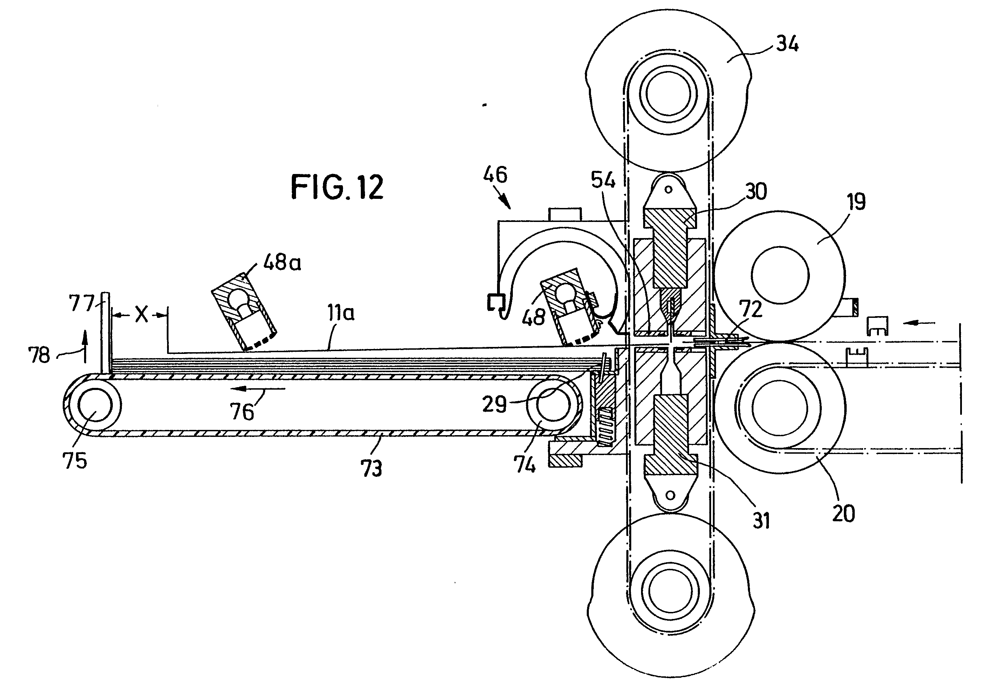

Fig. 12 zeigt die Vorrichtung zum Herstellen und Stapeln der Beutel bei horizontaler Schlauchzufuhr und Beutelherstellung. So zeigt Fig. 12, daß alle Vorrichtungsteile zur Beutelherstellung, die in Fig. 7 dargestellt sind, auch bei der Herstellung von Beuteln in horizontaler Erstreckung anwendbar sind. So wird hingewiesen auf die beiden Vorzugswalzen 19 und 20, den Einführkamm 72, die Schweißbalken 30 und 31 und die Halte- und Transportvorrichtung 46. Diese ist in Gestalt des rotierenden Körpers 48 mit dem weiteren rotierenden Körper 48a somit zweifach in Bewegungsrichtung der zugeführten Beutel hintereinander vorhanden.

Die Beutel werden abgelegt auf einem Band 73, das um die beiden Umlenkrollen 74 und 75 in angegebener Pfeilrichtung 76 bewegbar ist. Es sei verstanden, daß während der Ablage der einzelnen Beutel zur Bildung eines Beutelblockes das Band 73 stillsteht. Die Beutel werden durch die Vorzugswalzen 19 und 20 und den Einführkamm 72 um den Betrag einer Beutellänge vorgeschoben, wie das durch den Beutel 11a dargestellt ist. Dieser wird nach der Abtrennung vom Schlauch durch die rotierenden Vakuumleisten 48, 48a, wie das in der Zeichnung in Fig. 12 dargestellt ist, erfaßt und in Längsrichtung um den Betrag X bewegt. Dann erfolgt, durch die gespannte Feder 54 das Aufschlagen auf die Stapelstifte 29 in der in Fig. 7 bis 12 beschriebenen Weise.

Nachdem auf dem Band 73 eine ausreichende Menge an Beuteln aufgeschlagen sind, dann werden in der vorbeschriebenen Weise die Stifte 29 zurückgezogen. Dann wird durch die dann erfolgende Bewegung des Bandes 73 der Beutelblock wegtransportiert.

Aus Fig. 12 ist ersichtlich, daß die Beutel bei ihrer Stapelung in der vorbeschriebenen Weise auch verblockt werden können, weil die Schweißdrähte 26 und 26a der Schweiß- und Trennvorrichtung die notwendige Erhitzung des vorhergehenden Beutels und des nachfolgenden Beutels ergeben haben, um diese mit ihrer Stapelung einander zu verbinden. Fig. 12 zeigt ebenfalls, daß auch die Stapelung auf den Stiften 20 ohne die vorhergehende Verblockung durch Anheften über Schmelzhitze eines Beutels an den nachfolgenden Beutel erfolgen kann.

Aus Fig. 12 ist verständlich, daß bei horizontaler Ablage der Beutel es nicht der besonderen Stapelstifte 29 bedarf, sondern auch eine sonstige Festhaltevorrichtung Anwendung finden kann, um die Beutel nach ihrer Stapelung zu halten. So könnte dies beispielsweise durch eine Anschlagleiste 77 erfolgen, die nach der Herstellung eines ausreichenden Stapels in angegebener Pfeilrichtung 78 angehoben wird. Es sei jedoch bemerkt, daß bevorzugt ein Festhalten der einzelnen Beutel in deren hinteren Bereich stattfindet, d. h. an der örtlichen Stelle, an der die Stifte 29 vorhanden sind, wobei diese Stifte 29 durch eine sonstige Festhaltevorrichtung ersetzt sein können.

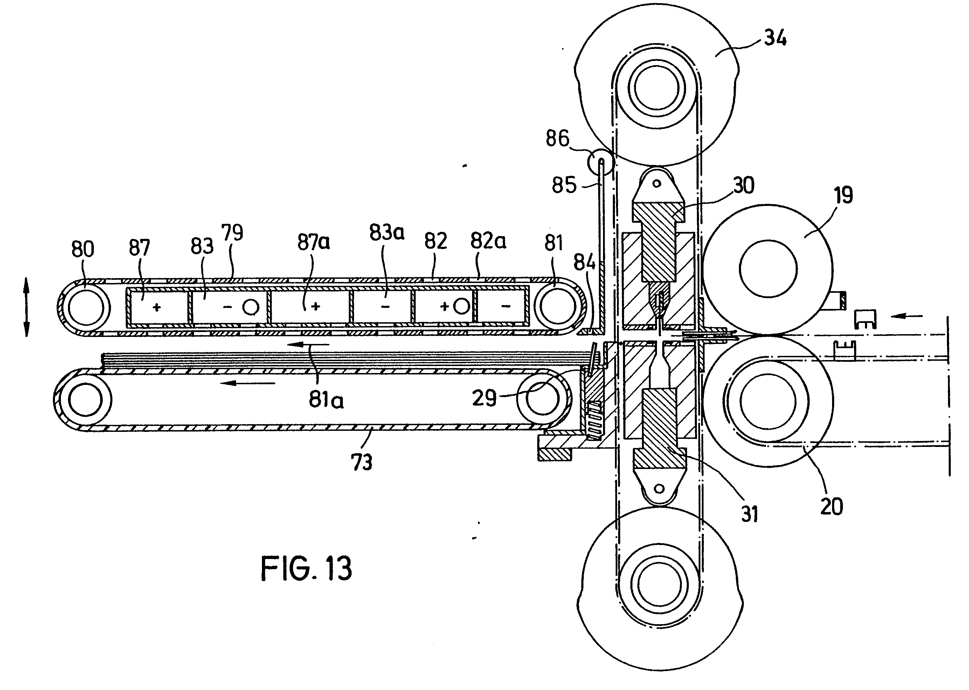

Fig. 13 zeigt, daß die beiden mit Unterdruckkammern versehenen umlaufenden Leisten 48 und 48a ersetzt sind durch ein umlaufendes Band 79, das um die beiden Umlenkrollen 80 und 81 geführt und in angegebener Pfeilrichtung 81a bewegt ist. Diese ständige Bewegung hat Vorteile. Durch diese mögliche ständige Bewegung kann die von den Vorzugswalzen 19 und 20 geförderte Folie in deren Bewegungsrichtung kurz hinter dem Schweiß- und Trennbalken 30 sowie 31 erfaßt werden. Dieses Erfassen erfolgt durch eine Vielzahl von Löchern 82 und 82a usw. die in dem Band 79 vorhanden sind. Diese Löcher sind zum Transport der Folie an Unterdruckkammern 83, 83a angeschlossen, die nach dem Ausführungsbeispiel mit dem Minuszeichen versehen sind. Da die Vorzugswalzen 19, 20 nur absatzweise bewegt sind, halten diese den Folienschlauch nach dessen Transport um eine vorbestimmte Länge fest. Dadurch kann das Band 79 ständig umlaufen. Bei stillstehenden Vorzugswalzen 19 und 20 führt das weitere Umlaufen des Bandes 79 nicht zu einem Transport des Beutels, weil das Band 79 dann an dem Folienschlauch schleift.

Vor dem Band 79 ist ein Niederschläger 84 vorhanden, der mit entsprechendem Bohrungen versehen ist, die den Stapelstiften 29 gegenüberliegen.

Der Niederschläger kann mit Stangen 85 versehen sein, die an ihren oberen Enden Rollen 86 tragen, die an der Nockscheibe 34 anliegen. Dadurch ist gewährleistet, daß das Schweißen und Trennen sowie das kurz dahinter nach vorheriigem Weitertransport um die Länge X (Fig. 12) erfolgende Niederschlagen auf die Stifte synchron abgestimmt sind. Nachdem der Beutel durch die Stifte 29 oder eine andere Festhaltevorrichtung, die die Stifte 29 ersetzt, gehalten ist, dann wird nach Fig. 13 durch die Überdruckkammern 87, 87a und die Löcher 82, 82a des Bandes 79 der Beutel von dem Band 79 getrennt und durch Luftdruck auf den vorhergehenden Beutel aufgelegt.

Nachdem eine ausreichende Anzahl von Beuteln gestapelt worden ist, dann wird durch Bewegung des Bandes 73 der Beutelstapel wegtransportiert, so daß anschließend ein neuer Stapel 73 gebildet werden kann.

## Patentansprüche

1. Verfahren zum Herstellen und Stapeln von Beuteln oder dergleichen Verpackungen aus thermoplastischer Kunststoffolie in Gestalt eines Schlauches oder Halbschlauches (18), wobei die beiden Folienlagen eines jeden Beutels durch eine Schweißnaht verbunden werden und daneben ein Trennschnitt (23) zum Abtrennen des Beutels vom Schlauch oder Halbschlauch angebracht wird und der Beutel in einer angeschlossenen, mit Stapelstiften (29) versehenen Festhaltevorrichtung (27, 28) im Bereich seines oberen Beutelrandes (17) erfaßt und mit den vorhergehenden Beuteln gestapelt wird, dadurch gekennzeichnet, daß jeder Beutel (11) nach seiner Herstellung durch Abtrennen vom Schlauch (18) oder Halbschlauch (18) um einen Betrag, der durch den Abstand der Stapelstifte (29) zur Schweiß- und Trennvorrichtung (21, 22, 23, 24) bestimmt ist, in seiner Längsrichtung bewegt und durch eine Bewegung in Querrichtung dazu in die Festhaltevorrichtung (27, 28, 29) gebracht wird.

2. Verfahren zum Herstellen und Stapeln von Beuteln nach Anspruch 1, wobei mit dem Stapeln der Beutel jeder dem Stapel zugeführte Beutel (11a) mit dem vorhergehenden Beutel des Stapels an einer Kante bzw. im Bereich einer Kante verschweißt wird wozu die Hitze einer bei der Beutelherstellung angebrachten Schweißnaht (13) nach dem Transport des Beutels in dessen Längsrichtung und der Bewegung in Querrichtung durch Aufschlagen auf die Stifte zum Verblocken durch Verschweißen mit dem vorhergehenden Beutel des Stapels genutzt wird.

3. Vorrichtung zur Durchführung des Verfahrens nach Anspruch 2, dadurch gekennzeichnet, daß deren Schweiß- und Trennvorrichtung (21, 22, 23, 24) ihre Trenneinrichtung (23) in Bewegungsrichtung der Folienbahn (18) zwischen jeweils einer Schweißeinrichtung (25, 26) hat, wobei die erste Schweißeinrichtung (25) eine Schweißnaht (12) zum Verschließen des nachfolgenden Beutels an dessen Bodenende herstellt und die zweite Schweißeinrichtung (26) diejenige Schweißnaht (13) herstellt, die das obere Ende des Beutels (11a) nach dessen Bewegung in Längsrichtung und Aufschlagen auf die Stapelstifte (29) in Querrichtung mit dem vorhergehenden Beutel (11) des Beutelstapels verblockt.

4. Vorrichtung nach Anspruch 3, dadurch gekennzeichnet, daß in Bewegungsrichtung der Folienbahn (18) vor und hinter der Trenneinrichtung (23) die Schweißeinrichtungen (25, 25a, 26, 26a) auf beiden Seiten der Folienbahn (18) angeordnet sind.

5. Vorrichtung nach den Ansprüchen 3 und 4, dadurch gekennzeichnet, daß die Schweißeinrichtung aus zwei gegenüberliegenden Schweißbalken besteht, von denen einer ein vorstehendes Schneidmesser (23) aufweist, das in eine Nut (24) des gegenüberliegenden Schweißbalkens eingreift.

6. Vorrichtung nach Anspruch 5, dadurch gekennzeichnet, daß die beiden Schweißbalken (21, 22) an ihren gegenüberliegenden Stirnflächen mit einem hochwärmeisolierenden Belag (36, 37, 38, 39), insbesondere Glasfibermatte belegt sind, auf der außen einem jeden Schweißbalken zugeordnet, in Bewegungsrichtung des zu verarbeitenden Schlauches vor und hinter der Nut (24) bzw. Messer (23) ein Flachheizband (25, 25a, 26, 26a) angeordnet ist.

7. Vorrichtung nach Anspruch 6, dadurch gekennzeichnet, daß das dem Schweißbalken (21) zugeordnete Messer (23) aus einem an einem umlaufenden Zahnriemen (30) angeordneten Rasierklinge besteht und in der Nut (41) des Schweißbalkens (21) eine aus Kunststoff bestehende Führung (42) für den Zahnriemen (30) und die Rasierklinge (23) angeordnet ist.

8. Vorrichtung nach einem oder mehreren der Ansprüche 3 bis 7, dadurch gekennzeichnet, daß die Vorrichtung zum Transport des Beutels in dessen Längsrichtung und Aufschlagen des Beutels auf die Stapelstifte durch eine Bewegung in Querrichtung aus einem um eine Achse (47) quer zur Längserstreckung des Beutels (11) rotierenden Körper (48) besteht.

9. Vorrichtung nach Anspruch 8, dadurch gekennzeichnet, daß der rotierende Körper (48) mit einer Saugeinrichtung durch Unterdruck versehen ist.

10. Vorrichtung nach den Ansprüchen 8 und 9, dadurch gekennzeichnet, daß der rotierende Körper (48) mit einer Außenfläche (54) versehen ist, deren Abstand zur Rotationsachse (47) mit jeder Drehung sich wiederholend veränderlich ist.

11. Vorrichtung nach einem der Ansprüche 8 bis 10, dadurch gekennzeichnet, daß der rotierende Körper (48) mit einer hohlen Drehachse und mit einer sich über dessen Länge erstreckenden Blattfeder (54) versehen ist, die durch eine gekrümmte Anschlagfläche (55) gespannt ist und zum Aufschlagen des Beutels auf die Stifte (29) entspannt ist.

12. Vorrichtung nach Anspruch 11, dadurch gekennzeichnet, daß der rotierende Körper (48) an seiner in Drehrichtung hinteren Wandung (53) mit der Blattfeder (54) versehen ist und der Drehkörper von einer feststehenden Rinne (51) mit etwa halbkreisförmigen Querschnitt umgeben ist, deren Öffnung zu den zu transportierenden und aufzuschlagenden Beutel (11) zugerichtet ist und die Blattfeder (54) an der Innenwandung (55) der Rinne (51) anliegt und durch diese gespannt ist.

13. Vorrichtung nach Anspruch 12, dadurch gekennzeichnet, daß an der unteren Kante der Rinne (51) ein sich über dessen Länge erstreckender Luftkanal (56) mit zum Beutel (11) gerichteten Luftauslaßöffnungen (57), vorzugsweise in Gestalt eines längsverlaufenden Schlitzes, vorhanden ist.

14. Vorrichtung nach Anspruch 8 und einem oder mehreren der Ansprüche 9 bis 13, dadurch gekennzeichnet, daß die Stapelstifte (29) der in an sich bekannter Weise zurückziehbaren Nadelleiste (28) eine leicht schräg nach oben gerichtete Neigung haben.

15. Vorrichtung nach einem oder mehreren der Ansprüche 8 bis 14, dadurch gekennzeichnet, daß in Bewegungsrichtung des Beutels (11) hinter dem rotierenden Körper ein quer zur Beutelerstreckung bewegbares Schwert (58) vorhanden ist, das den von den Stapelstiften (29) befreiten Beutelstapel faltet und auf einen Tisch (60, 67) und zwischen diesen und eine darüber angeordnete angetriebene Rolle (63) einlegt.

16. Vorrichtung nach Anspruch 15, dadurch gekennzeichnet, daß die oberhalb des Tisches (60, 67) angeordnete angetriebene Rolle (63) an einem Schwenkhebel (62) gelagert ist.

17. Vorrichtung nach Anspruch 16, dadurch gekennzeichnet, daß dem Tisch (60, 67) eine Perforier- und gegebenenfalls Locheinrichtung (66) zugeordnet ist.

18. Vorrichtung nach Anspruch 3, dadurch gekennzeichnet, daß in Bewegungsrichtung hinter der in vertikaler Ebene bewegten Schweißeinrichtung (21, 22) und der Trenneinrichtung (23) eine in horizontaler Ebene angeordnete Beutelablage (73) vorhanden ist und oberhalb dieser Beutelablage eine Halte- und Transportvorrichtung (48, 48a bzw. 79) angeordnet ist, die die einzelnen Beutel zu deren Ablage an der Beutelablage (73) in Längsrichtung und in einer Richtung quer dazu bewegt.

19. Vorrichtung nach Anspruch 18, dadurch gekennzeichnet, daß die Beutelablage aus einem mit zwei Umlenkrollen (74, 75) versehenen Band besteht (73).

20. Vorrichtung nach den Ansprüchen 18 und 19, dadurch gekennzeichnet, daß die Halte- und Transportvorrichtung aus einem mit zwei Umlenkrollen (80, 81) versehenen umlaufenden Band (79) besteht, in dem Löcher (82, 82a) vorhanden sind, die an eine zwischen den beiden Trümern des Bandes vorhandene Unterdruckkammer (83) angeschlossen sind.

21. Vorrichtung nach Anspruch 20, dadurch gekennzeichnet, daß die Löcher (82, 82a) in dem Band (79) zusätzlich an eine Überdruckkammer (87) anschließbar sind.

22. Vorrichtung nach den Ansprüchen 20 und 21, dadurch gekennzeichnet, daß zwischen den beiden Trümen des Halte- und Transportbandes (79) in Bewegungsrichtung des transportierten Beutels hintereinander und abwechselnd Kammern (82) für Unterdruck und Kammern (87) für Überdruck angeordnet sind.

23. Vorrichtung nach den Ansprüchen 18 bis 22, dadurch gekennzeichnet, daß in Bewegungsrichtung des Beutels vor dem Halte- und Transportband den Stapelstiften gegenüberliegend ein Niederschläger (84) angeordnet ist.

**Claims**

1. Method for the manufacture and stacking of bags or the like wrappings of thermoplastic synthetic material film in the structure of a hose or half-hose (18), wherein both the film layers of each bag are connected by a welding seam and a severing cut (23) is applied therebesides for the separation of the bag from the hose or half hose and the bag is seized in the region of its upper bag rim (17) and stacked with the preceding bags in a connected retaining device (27, 28) provided with stacking pins (29), characterised in that each bag (11) after its manufacture by separation from the hose (18) or half-hose (18) is moved in its longitudinal direction by an amount which is determined by the spacing of the stacking pins (29) from the welding and severing device (21, 22, 23, 24) and brought into the retaining device (27, 28, 29) by a movement in a direction transverse thereto.

2. Method for the manufacture and stacking of bags according to claim 1, wherein together with the stacking of the bags, each bag (11a) fed to the stack is welded together with the preceding bag of the stack at an edge or in the region of an edge, for which purpose the heat of a welding seam (13) applied during manufacture of the bag is utilized, after the transport of the bag in its longitudinal direction and the movement in transverse direction through impact on the pins, for the block-making through welding together with the preceding bag of the stack.

3. Device for the performance of the method according to claim 2, characterised in that its welding and severing device (21, 22, 23, 24) has its severing equipment (23) in direction of movement of the film web (18) each time between a welding equipment (25, 26), wherein the first welding equipment (25) produces a welding seam (12) for the closing of the following bag at its bottom end and the second welding equipment (26) produces that welding seam (13), which connects the upper end of the bag (11a), after its movement in longitudinal direction and impact on the stacking pins (29) in transverse direction, into a block with the preceding bag (11) of the stack of bags.

4. Device according to claim 3, characterised in that the welding equipments (25, 25a, 26, 26a) are arranged on both sides of the film web (18) before and behind the severing equipment (23) in direction of movement of the film web (18).

5. Device according to the claims 3 and 4, characterised in that the welding equipment consists of two mutually opposite welding beams, of which the one displays a protruding cutting blade (23), which engages into a groove (24) of the oppositely disposed welding beam.

6. Device according to claim 5, characterised in that both the welding beams (21, 22) are coated at their mutually opposite end faces by a highly thermally insulating coating (36, 37, 38, 39), in particular glass fibre matting, on the outside of which a flat heating tape (25, 25a, 26, 26a) is, in association with each welding beam, arranged before and behind the groove (24) or blade (23) in direction of movement of the hose to be processed.

7. Device according to claim 6, characterized in that the blade (23) associated with the welding beam (21) consists of a razor blade arranged at a circulating toothed belt (30) and a guide (42), consisting of synthetic material, for the toothed belt (30) and the razor blade (23) is arranged in the groove (41) of the welding beam (21).

8. Device according to one or more of the claims 3 to 7, characterised in that the device for the transport of the bag in its longitudinal direction and impacting of the bag on the stacking pins by a movement in transverse direction consists of a body (48) rotating about an axis (47) transverse to the longitudinal extent of the bag (11).

9. Device according to claim 8, characterised in that the rotating body (48) is provided with a suction equipment through underpressure.

10. Device according to the claims 8 and 9, characterised in that the rotating body (48) is provided with an external surface (54), the spacing of which from the rotational axis (47) is repetitively variable during each rotation.

11. Device according to one of the claims 8 to 10, characterised in that the rotating body (48) is provided with a hollow rotational axle and with a leaf spring (54), which extends over the length thereof, is tensioned by a curved abutment surface (55) and relieved for impacting the bag on the pins (29).

12. Device according to claim 11, characterised in that the rotating body (48) is provided with the leaf spring (54) at its wall (53) to the rear in rotational direction and the rotational body is surrounded by a stationary gutter (51) of about semicircularly shaped cross-section, the opening of which is directed towards the bag (11) to be transported and impacted and the leaf spring (54) lies against the inside wall (55) of the gutter (51) and is tensioned by this.

13. Device according to claim 11, characterised in that present at the lower edge of the gutter (51) is an air channel (56) extending over the length thereof and with air outlet openings (57), preferably in the structure of a longitudinally extending slot, directed towards the bag (11).

14. Device according to claim 8 and one or more of the claims 9 to 13, characterised in that the stacking pins (29) of the needle bar (28), which is retractable in a manner known per se, have a slight inclination directed obliquely upwards.

15. Device according to one or more of the claims 8 to 14, characterised in that present behind the rotating body in direction of movement of the bag (11) is a blade (58), which is movable transversely to the extent of the bag, folds the stack of bags freed of the stacking pins (29) and lays it on a table (60, 67) between this and a driven roller (63) arranged thereover.

16. Device according to claim 15, characterised in that the driven roller (63) arranged above the table (60, 67) is borne at a pivot lever (62).

17. Device according to claim 16, characterised in that a perforating, and in a given case punching equipment (66) is associated with the table (60, 67).

18. Device according to claim 3, characterised in that a bag deposit (73) arranged in horizontal plane is present in direction of movement behind the severing equipment (23) and the welding equipment (21, 22) moved in vertical plane and that a holding and transport device (48, 48a or 79) is arranged above this bag deposit and moves the individual bags in longitudinal direction and in a direction transverse thereto for their deposition at the bag deposit (73).

19. Device according to claim 18, characterised in that the bag deposit consists of a belt (73) provided with two deflecting rollers (74, 75).

20. Device according to the claims 18 and 19, characterised in that the holding and transport device consists of a circulating belt (79), which is provided with two deflecting rollers (80, 81) and in which holes (82, 82a) are present, which are connected to an underpressure chamber (83) present between both the runs of the belt.

21. Device according to claim 20, characterised in that the holes (82, 82a) in the belt (79) are additionally connectible to an excess pressure chamber (87).

22. Device according to the claims 20 and 21, characterised in that chambers (82) for underpressure and chambers (87) for excess pressure are arranged alternately and one behind the other in direction of movement of the transported bag between both the runs of the holding and transport belt (79).

23. Device according to the claims 18 to 22, characterised in that a downwardly acting striker (84) is arranged opposite the stacking pins and before holding and transport belt in direction of movement of the bag.

## Revendications

1. Procédé pour la fabrication et l'empilage de sacs ou autres emballages de ce type, à partir de feuilles thermoplastiques ayant la forme d'un tuyau ou d'un demi-tuyau (18), les deux couches de feuille de chaque sac étant reliées entre elles par un cordon de soudure et une coupe détachante (23) étant appliquée à côté pour séparer le sac du tuyau ou du demi-tuyau et le sac étant saisi dans la zone de son bord supérieur (17) par un dispositif de serrage (27, 28) rattaché, muni de broches d'empilage (29), caractérisé en ce que chaque sac (11), après sa fabrication par séparation du tuyau (18) ou du demi-tuyau (18), dans une mesure qui est déterminée par la distance des broches d'empilage (29) au dispositif de soudage et de séparation (21, 22, 23, 24), est déplacé dans le sens de sa longueur et, par un mouvement transversal par rapport à ce déplacement, est amené dans le dispositif de serrage (27, 28, 29).

2. Procédé pour la fabrication et l'empilage de sacs selon la revendication 1 dans lequel, lors de l'empilage des sacs, chaque sac (11a) amené dans la pile est soudé au sac qui le précède dans la pile, suivant une arête ou dans la zone d'une arête, la chaleur d'un cordon de soudure (13) produit lors de la fabrication du sac étant utilisée, après le transport du sac dans le sens de sa longueur et son déplacement transversal, par application sur les broches, pour le blocage par soudage sur le sac qui le précède dans la pile.

3. Dispositif pour la mise en œuvre du procédé selon la revendication 2, caractérisé en ce que, dans le dispositif de soudage et de séparation (21, 22, 23, 24), le dispositif de séparation (23) est placé, dans le sens de déplacement de la bande de feuille (18), entre les dispositifs de soudage (25, 26), le premier dispositif de soudage (25) produisant un cordon de soudure (12) pour sceller le sac suivant sur son extrémité inférieure et le deuxième dispositif de soudage (26) produisant un cordon de soudure (13) qui bloque l'extrémité supérieure du sac (11a) après son déplacement dans le sens de sa longueur et application sur les broches d'empilage (29) dans le sens transversal, sur le sac (11) précédent de la pile de sacs.

4. Dispositif selon la revendication 3, caractérisé en ce que dans le sens de déplacement de la bande de feuilles (18), avant et après le dispositif de séparation (23), les dispositifs de soudage (25, 25a, 26, 26a) sont disposés de part et d'autre de la bande de feuilles (18).

5. Dispositif selon les revendications 3 et 4, caractérisé en ce que le dispositif de soudage est constitué par deux barres de soudage opposées, dont l'une présente une lame de soudage (23) en saillie, qui est en liaison mécanique avec une rainure (24) de la barre de soudage opposée.

6. Dispositif selon la revendication 5, caractérisé en ce que les deux barres de soudage (21, 22) sont garnies, sur leur face frontale opposée, d'une garniture (36, 37, 38, 39) à isolation thermique élevée, en particulier une natte en fibres de verre, sur laquelle est disposée à l'extérieur une bande chauffante plate (25, 25a, 26, 26a) associée à chaque barre de soudage, et placée dans le sens de déplacement du tuyau à transformer, avant et après la rainure (24) et la lame (23).

7. Dispositif selon la revendication 6, caractérisé en ce que la lame (23) associée à la barre de soudage (21) est constituée par une lame de rasoir disposée sur une courroie dentée (30) rotative, et que dans la rainure (41) de la barre de soudage (21) se trouve un guidage (42) en matière plastique pour la courroie dentée (30) et la lame de rasoir (23).

8. Dispositif selon une ou plusieurs des revendications 3 à 7, caractérisé en ce que le dispositif servant à transporter le sac dans le sens de sa longueur et à appliquer le sac sur la broche d'empilage par un déplacement transversal, est constitué par un corps (48), en rotation autour d'un axe (47) perpendiculaire au sens longitudinal du sac (11).

9. Dispositif selon la revendication 8, caractérisé en ce que le corps rotatif (48) est muni d'un dispositif d'aspiration sous pression réduite.

10. Dispositif selon les revendications 8 et 9, caractérisé en ce que le corps rotatif (48) est muni d'une face extérieure (54) dont la distance à l'axe de rotation (47) peut être modifiée de façon répétée pour chaque rotation.

11. Dispositif selon l'une des revendications 8 à 10, caractérisé en ce que le corps rotatif (48) est muni d'un axe de rotation creux et d'un ressort à lame (54) s'étendant sur sa longueur, qui est tendu au moyen d'une face de butée (55) courbe et qui est détendue pour l'application du sac sur les broches (29).

12. Dispositif selon la revendication 11, caractérisé en ce que le corps rotatif (48) est muni, sur sa paroi arrière (53), vu dans le sens de la rotation, d'un ressort à lame (54) et que le corps rotatif est entouré d'un canal (51) fixe ayant approximativement une section en forme de demi-cercle, dont l'ouverture est dirigée vers le sac (11) à transporter et à appliquer et que le ressort à lame (54) s'appuie sur la paroi intérieure (55) du canal (51) et qu'il est tendu par cette paroi.

13. Dispositif selon la revendication 12, caractérisé en ce que sur l'arête inférieure du canal (51) est prévu un canal d'aération (56) s'étendant suivant sa longueur, avec des orifices de sortie d'air (57) dirigées vers le sac (11), de préférence sous la forme d'une fente longitudinale.

14. Dispositif selon la revendication 8 et une ou plusieurs des revendications 9 à 13, caractérisé en ce que les broches d'empilage (29) de la barre à aiguilles (28), rétractable de manière connue en soi, sont légèrement inclinées vers le haut.

15. Dispositif selon une ou plusieurs revendications 8 à 14, caractérisé en ce que dans le sens de déplacement du sac (11), derrière le corps rotatif, se trouve une aile (58) mobile dans le sens transversal du sac, qui plie la pile de sacs libérée des broches d'empilage (29) et la dépose sur une table (60, 67) et entre celle-ci et un rouleau entraîné (63) disposé au-dessus.

16. Dispositif selon la revendication 15, caractérisé en ce que le rouleau entraîné (63) disposé au-dessus de la table (60, 67) est monté sur un levier de pivotement (62).

17. Dispositif selon la revendication 16, caractérisé en ce qu'à la table (60, 67) est associé un dispositif (66) de perforation et éventuellement de poinçonnage.

18. Dispositif selon la revendication 3, caractérisé en ce que, dans le sens du déplacement, derrière le dispositif de soudage (21, 22) mobile dans un plan vertical et le dispositif de séparation (23), se trouve un dépôt de sacs (73) disposé dans le plan horizontal et au-dessus de ce dépôt de sacs, il est prévu un dispositif de serrage et de transport (48, 48a et 79), qui déplace les sacs individuels pour les déposer dans le dépôt de sacs (73) dans le sens de la longueur et dans un sens perpendiculaire à ce dernier.

19. Dispositif selon la revendication 18, caractérisé en ce que le dépôt de sacs (73) est constitué par une bande munie de deux poulies de guidage (74, 75).

20. Dispositif selon les revendications 18 et 19, caractérisé en ce que le dispositif de serrage et de transport est constitué par une bande (79) rotative munie de deux poulies de guidage (80, 81), la bande étant munie de trous (82, 82a) qui sont raccordés à une chambre de dépression (83) prévue entre les deux compartiments de la bande.

21. Dispositif selon la revendication 20, caractérisé en ce que les trous (82, 82a) de la bande (79) peuvent être raccordés en outre à une chambre de surpression (87).

22. Dispositif selon les revendications 20 et 21, caractérisé en ce qu'entre les deux compartiments de la bande de serrage et de transport (79), dans le sens de déplacement du sac transporté, des chambres (82) pour la dépression et des chambres (87) pour la surpression sont disposées les unes derrière les autres et de manière alternée.

23. Dispositif selon les revendications 18 à 22, caractérisé en ce que dans le sens de déplacement du sac, un abaisseur (84) est prévu devant la bande de serrage et de transport, et face aux broches d'empilage.

FIG.1

FIG.2

FIG.3

FIG.4

FIG.5

FIG.6

FIG.7

FIG.8

FIG.9

FIG.10

FIG.11

4

FIG.12

0 090 352

FIG.13